# EUROPEAN PATENT SPECIFICATION

(11) **EP 1 993 817 B1**
(45) Date of publication and mention of the grant of the patent: **03.10.2012**
(21) Application number: 07713045.8
(22) Date of filing: 16.02.2007
(51) Int. Cl.: B29D 30/00, B29D 30/24

(54) **VARIABLE-CENTRELINE TYRE BUILDING DRUM**
REIFENAUFBAUTROMMEL MIT VARIABLER MITTELLINIE
TAMBOUR DE FABRICATION DE PNEU A AXE VARIABLE

(30) Priority: 17.02.2006 IT TO20060112
(43) Date of publication of application: 26.11.2008
(73) Proprietor: Marangoni Meccanica S.P.A., 38068 Rovereto (IT)
(72) Inventor: MARANGONI, Giorgio, 38068 Rovereto (IT)
(74) Representative: Prato, Roberto
(86) International application number: PCT/IB2007/000378
(87) International publication number: WO 2007/093905

(56) References cited:
- EP-A1- 1 533 107
- EP-A2- 0 798 104
- WO-A-92/07707
- BE-A- 653 905
- BE-A- 660 932
- DE-A1- 2 206 911
- DE-A1- 3 922 227
- JP-A- 2003 334 867
- US-A- 4 805 872
- US-A- 5 268 057
- US-A1- 2005 016 662

## Description

### TECHNICAL FIELD

The present invention relates to a tyre building drum and to a tyre building system comprising at least of said drum.

### BACKGROUND ART

The present invention specifically and preferably applies to systems, in which at least one extruder feeds extruded elastomeric material, normally in rope form, to at least one application unit for applying the extruded elastomeric material to a surface to be rubberized of a vehicle tyre carcass.

In systems of this sort, the carcass is supported and rotated about its axis by a drum - in this case, a second-stage drum - to allow the application unit to form, on the surface to be rubberized of the carcass, a cover layer, e.g. a layer forming a component part of the tyre.

In systems of the above sort, tyre building drums may be used of the type comprising a spindle having an axis and a first and second flange coaxial with said axis and movable axially with respect to each other to support and shape a tyre carcass; and a drive unit for rotating the first and second flange (19, 20) about said axis (6), and for varying a distance between the first and second flange; the drive unit comprising an axially fixed drive shaft coaxial with said axis and defining an output shaft of the drive unit; the drive shaft comprising an end portion projecting outwards of the drive unit.

Tyre building drums of the above type are known from BE 653 905 and WO 92/07707.

### DISCLOSURE OF INVENTION

It is an object of the present invention to provide a tyre building drum, which is relatively straightforward, cheap, flexible, and relatively compact axially, and which can be used in systems for producing homogeneous cover layers, i.e. made of one mix, or multilayers, i.e. formed by superimposing two or more homogenous layers made of respective different mixes.

According to the present invention, there is provided a tyre building drum as claimed in Claim 1 and, preferably, in any one of the Claims depending directly or indirectly on Claim 1. Further there is provided a tyre building system according to claim 8. Particular embodiments of the invention are the subject of the dependent claims.

### BRIEF DESCRIPTION OF THE DRAWINGS

A non-limiting embodiment of the present invention will be described by way of example with reference to the accompanying drawings, in which:
Figures 1 and 2 show schematic axial sections of a preferred embodiment of the drum according to the present invention in two different operating configurations;
Figures 3 and 4 show schematic plan views of respective preferred embodiments of systems comprising at least one drum as shown in Figures 1 and 2.

### BEST MODE FOR CARRYING OUT THE INVENTION

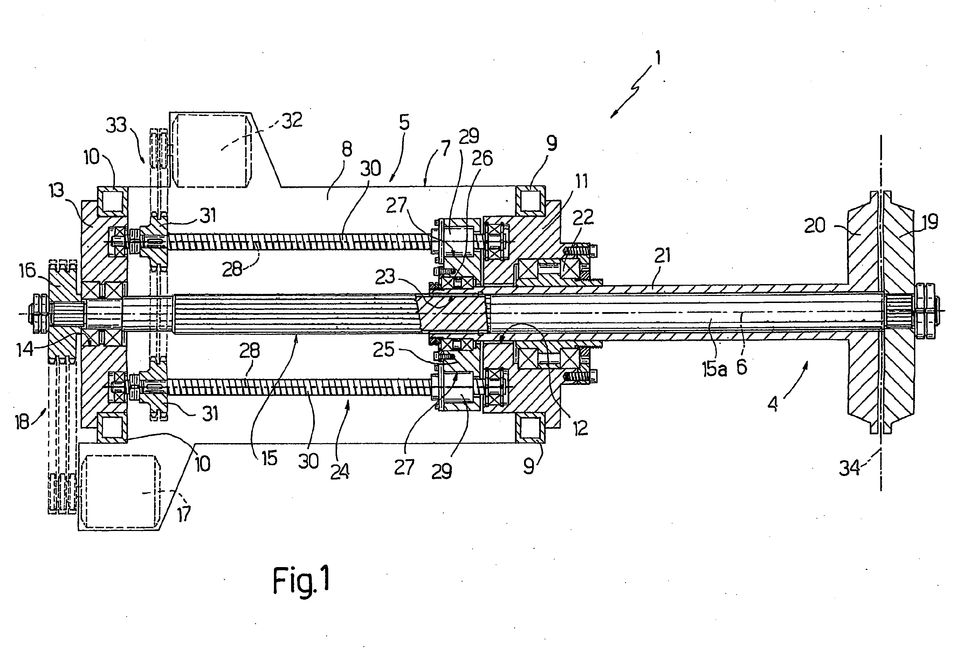

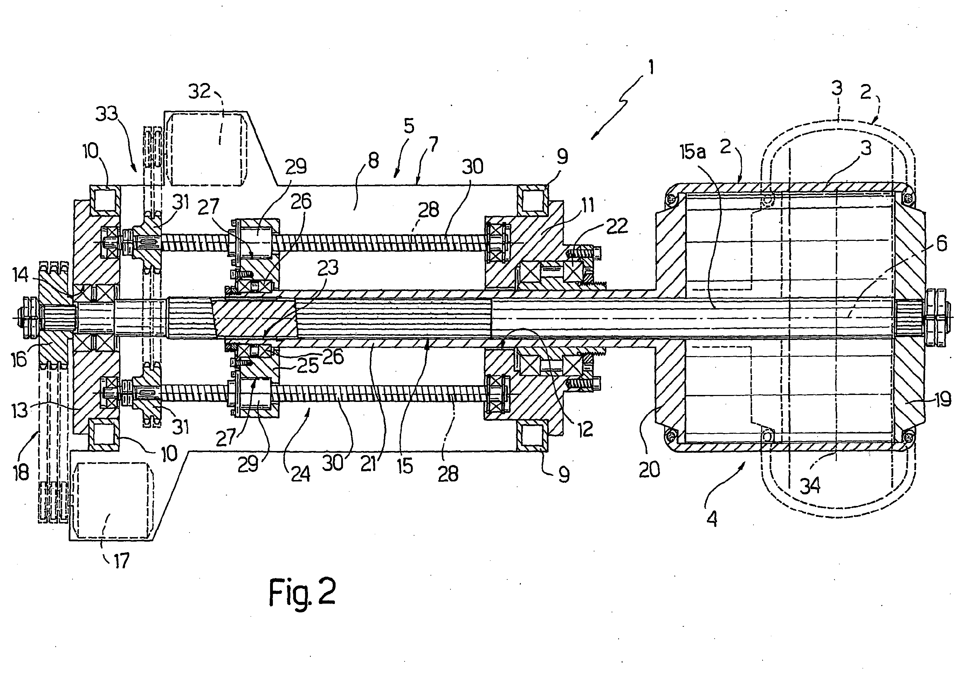

Number 1 in Figures 1 and 2 indicates as a whole a second-stage drum for producing tyres by forming a layer (not shown) of elastomeric material, e.g. a tread layer, on a surface 2 of a carcass 3.

Drum 1 comprises a spindle 4 supporting carcass 3; and a drive unit 5 supporting spindle 4 in projecting manner, and which provides for both rotating spindle 4 about its axis 6, and moving spindle 4 into a number of distinct operating configurations.

Drive unit 5 comprises a frame 7, in turn comprising a substantially rectangular base 8 having a longitudinal axis (not shown) parallel to axis 6, and two pairs of parallel posts 9, 10 extending upwards from opposite longitudinal ends of base 8. More specifically, the two posts 9 extend upwards from the longitudinal end of base 8 facing spindle 4, and support between them a plate 11 perpendicular to axis 6 and having a through hole 12 coaxial with axis 6. Similarly, the two posts 10 extend upwards from the opposite longitudinal end of base 8 to that facing spindle 4, and support between them a plate 13 perpendicular to axis 6 and having a through hole 14 coaxial with axis 6 and hole 12.

Drive unit 5 also comprises a shaft 15 extending through holes 12 and 14 and comprising a first end portion projecting from hole 14 and fitted with a toothed pulley 16 connected to a motor 17 by a chain drive 18; a second end portion 15a projecting from hole 12 and supporting spindle 4 projecting with respect to drive unit 5; and an intermediate portion extending between plates 11 and 13.

Spindle 4 comprises an outer flange 19 fitted in axially fixed manner to a free end of end portion 15a of shaft 15; and an inner flange 20 fitted in sliding manner to end portion 15a, and connected integrally to a sleeve 21, in which shaft 15 slides axially, and which extends through hole 12 into drive unit 5. Sleeve 21 is supported in rotary and axially sliding manner by plate 11 with the interposition of bearings 22, and is connected angularly, at its free end between plates 11 and 13, to shaft 15 by a splined joint 23 connecting inner flange 20 and shaft 15, and therefore outer flange 19 and inner flange 20, angularly integral with each other. Splined joint 23 also allows inner flange 20 to slide along shaft 15 between a closed position (Figure 1), in which inner flange 20 substantially contacts outer flange 19, and a fully open position (not shown), in which inner flange 20 is located just outside plate 11.

The axial position of inner flange 20 with respect to fixed outer flange 19 is regulated by an actuating device 24 forming part of drive unit 5 and comprising an annular plate 25, which is coaxial with axis 6, is interposed between plates 11 and 13, is fitted through with sleeve 21, and is connected in rotary manner to the free end of sleeve 21 by bearings 26 coaxial with axis 6. Annular plate 25 has two through holes 27 having respective axes 28 parallel to and on opposite sides of axis 6. -Holes 27 are engaged by respective nut screws 29, each of which is integral with plate 25 and engaged by a respective screw 30 coaxial with respective axis 28 and forming a screw-nut screw coupling with respective nut screw 29. Each screw 30 extends between plates 11 and 13, is supported in rotary and axially fixed manner by plates 11 and 13, and is fitted, at the end adjacent to plate 13, with a toothed pulley 31 connected, together with toothed pulley 31 of the other screw 30, to a motor 32 by a chain drive 33.

In actual use, a green carcass 3 - as is known, in the form of a substantially cylindrical barrel with two inner flanges at the beads - is fitted to flanges 19 and 20 in the Figure 1 closed position. Actuating device 24 is then operated to withdraw inner flange 20 from outer flange 19 and extend carcass 3 (as shown by the continuous line in Figure 2) with its beads secured in known manner to flanges 19 and 20. At this point, inner flange 20 is moved towards outer flange 19 to form carcass 3 into a toroidal shape (as shown by the dash line in Figure 2) ready to receive one or more layers (not shown) of elastomeric material on surface 2.

In connection with the above, it should be pointed out that spindle 4 can be fitted, with no alterations required, with a number of different-sized carcasses 3, which, because outer flange 19 is fixed, are positioned, when shaped, with their equatorial planes in different positions, depending on the axial size of carcasses 3. In other words, spindle 4 is a variable-centreline spindle, i.e. having a centreline 34 whose position varies along end portion 15a of shaft 15, depending on the axial size of carcass 3 fitted to spindle 4.

In connection with the above, it should also be pointed out that, because outer flange 19 is fixed, the axial size of spindle 4 - substantially equal to that of the axially largest carcass 3 that can be mounted on spindle 4 - is much smaller than that of a similar fixed-centreline spindle (not shown), which has a flange guide and a guide hood outside each flange.

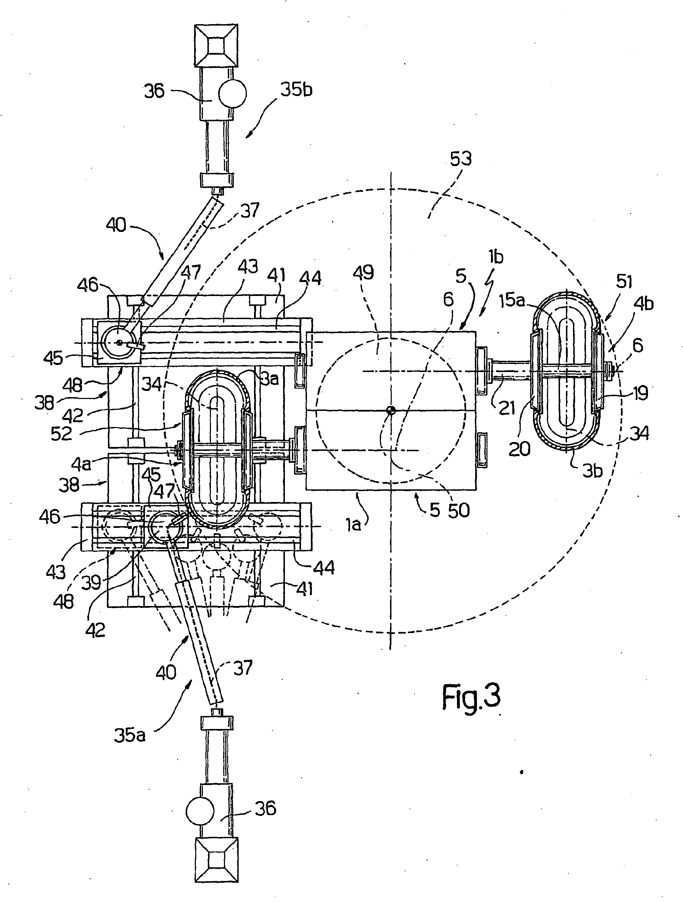

With reference to Figure 3, surface 2 to be rubberized is covered using at least one feed unit indicated as a whole by 35a and comprising an extruder 36 for forming a rope 37 of elastomeric material ; a known forming unit 38 for receiving rope 37, calandering rope 37 into a contoured strip 39, and applying contoured strip 39 to surface 2; and a known telescopic feed unit 40 interposed between extruder 36 and forming unit 38 to feed rope 37 to an inlet of forming unit 38.

Forming unit 38 comprises a base 41 fitted on top with a horizontal guide 42 crosswise to axis 6 and along which runs a powered carriage 43. This is fitted on top with a guide 44 parallel to axis 6 and along which runs a powered carriage 45 fitted with a turntable 46 powered to rotate about a vertical axis.

Turntable 46 supports, in known manner, a calender (not shown) for receiving rope 37, converting rope 37 to contoured strip 39, and feeding contoured strip 39 to an applicator roller 47, which is positioned tangent to and sweeps surface 2.

With reference to Figure 3, the following description relates to a system comprising one drum 1 - in this case, drum 1a - and one feed unit 35 - in this case, feed unit 35a - located alongside the spindle 4a of drum 1a.

To begin with, a carcass 3 - in this case, carcass 3a - is mounted on spindle 4a and shaped as described above. When performing the above operations, turntable 46 of feed unit 35a is maintained in a rest position 48 at the furthest point along relative guide 44 from drive unit 5 of drum 1a.

Spindle 4a of drum 1a is then rotated about respective axis 6, and feed unit 35a and, in particular, forming unit 38 are operated to sweep relative applicator roller 47 over surface 2 in known manner and according to a given program depending on the type and size of carcass 3a, and taking into account the position assumed by centreline 34 of spindle 4a. So doing, surface 2 of carcass 3a can be covered with a homogenous layer (not shown), i.e. made of one mix.

With reference to Figure 3, the following description relates to a system comprising one drum 1 - in this case, drum 1a - and two feed units 35 - in this case, feed units 35a and 35b - located on opposite sides of spindle 4a of drum 1a.

In this system, carcass 3a is mounted and shaped as described above, and feed units 35a and 35b are operated successively to cover surface 2 of carcass 3a with two superimposed layers (not shown) of respective different mixes.

With reference to Figure 3, the following description relates to a system comprising two substantially opposite drums 1 - in this case, drums 1a and 1b - mounted, with drive units 5 side by side, on a powered turntable 49 rotating (clockwise in Figure 3) about a vertical axis 50 between the two drive units 5.

In this system, turntable 49 is rotated in 180° steps, so that each of the two spindles - indicated 4a and 4b - selectively assumes a loading-unloading position 51 and a work position 52. In the event only feed unit 35a exists or is used, each spindle 4a, 4b is located, in work position 52, alongside carriage 43 of feed unit 35a. Conversely, in the event both feed units 35a and 35b exist and are used, each spindle 4a, 4b is located, in work position 52, between carriages 43 of feed units 35a and 35b.

In this system, a carcass - in this case, carcass 3a - is mounted and shaped on spindle 4a in loading-unloading position 51; and turntable 49 is then rotated 180° to move carcass 3a into work position 52, and spindle 4b into loading-unloading position 51. In work position 52, surface 2 of carcass 3a is covered with a homogenous layer or a multilayer of two different mixes, depending on whether feed unit 35a or both feed units 35a, 35b is/are used. At the same time, spindle 4b in loading-unloading position 51 is loaded with another carcass 3b, which may be the same as or different from carcass 3a. Carcass 3b is first shaped and then moved into work position 52, and the covered carcass 3a is moved into loading-unloading position 51 and unloaded off spindle 4a.

It should be pointed out that, in the above system, given the relatively small axial size of spindles 4a and 4b, drums 1a and 1b sweep a relatively small circular area 53 as turntable 49 rotates ; and, as turntable 49 rotates, turntables 46 of feed units 35a and 35b are maintained in respective rest positions 48 outside circular area 53.

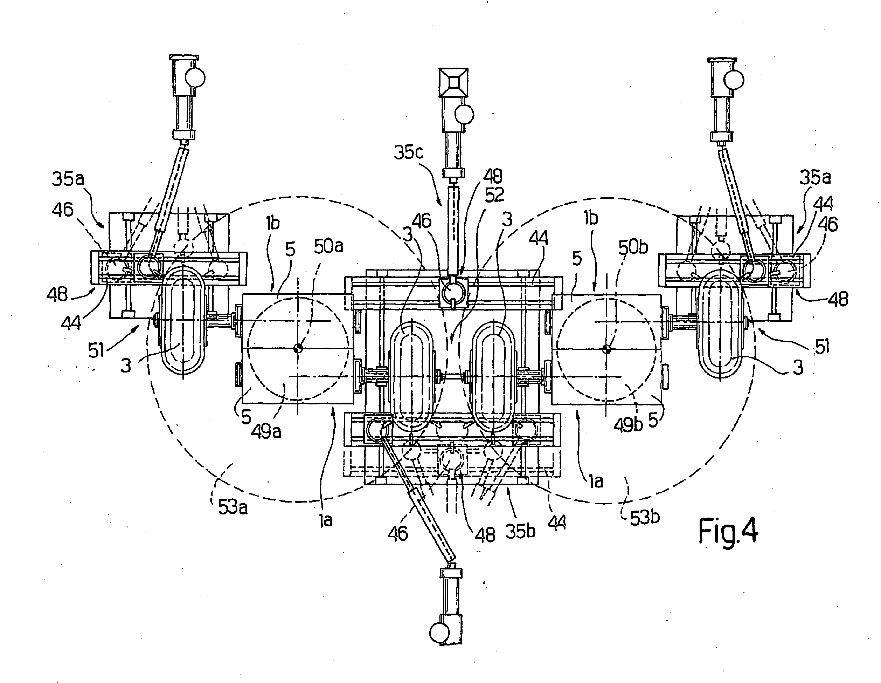

With reference to Figure 4, the following description relates to a system comprising two turntables 49a, 49b rotating about respective axes 50a, 50b and having respective pairs of substantially opposite drums 1a, 1b. Drums 1a, 1b in each pair are mounted with drive units 5 side by side, and sweep a respective circular area 53a, 53b substantially tangent to the circular area 53b, 53a swept by the other pair of drums 1a, 1b.

The above system can simultaneously process four, even different, carcasses 3. Carcasses 3 are loaded onto each turntable 49a, 49b at a relative loading-unloading position 51 located, inside relative circular area 53a, 53b, on the opposite side of relative axis 50a, 50b to the point of substantial tangency between areas 53a and 53b, and are moved, by rotating relative turntable 49a, 49b through 180° about relative axis 50a, 50b, into a work position 52 located at the point of substantial tangency between areas 53a, 53b, and facing the work position 52 of the other turntable 49b, 49a.

The Figure 4 system employs four feed units, two of which - indicated 35a - are located at respective loading-unloading positions 51, which, in this case, are also work positions, and the other two of which - indicated 35b and 35c - are positioned facing each other at the point of substantial tangency between areas 53a and 53b, and on opposite sides of work positions 52.

More specifically, whereas each feed unit 35a caters solely to the relative turntable 49a, 49b, each of feed units 35b, 35c caters to both turntables 49a, 49b. Moreover, whereas the rest position 48 of relative turntable 46 of each feed unit 35a is located at the furthest point along relative guide 44 from relative turntable 49a, 49b and outside relative circular area 53a, 53b, the rest position 48 of relative turntable 46 of each feed unit 35b, 35c is located at an intermediate point along relative guide 44 and outside circular areas 53a, 53b.

Using the same mix for feed units 35a, and another two mixes, differing from each other, for feed units 35b and 35c, the above system may even process four different carcasses 3 simultaneously, forming, on each, three superimposed cover lasers (not shown) of three different mixes.

## Claims

1. A tyre building drum comprising a spindle (4) having an axis (6) and a first and second flange (19, 20) coaxial with said axis (6) and movable axially with respect to each other to support and shape a tyre carcass (3) ; and a drive unit (5) for rotating the first and second flange (19, 20) about said axis (6), and for varying a distance between the first and second flange (19, 20) ; the drive unit (5) comprising an axially fixed drive shaft (15) coaxial with said axis (6) and defining an output shaft of the drive unit (5); the axially fixed drive shaft (15) comprising an end portion (15a) projecting outwards of the drive unit (5); and the drum (1) being **characterized in that** the first flange (19) is fixed to the end portion (15a) of the axially fixed drive shaft (15) to rotate with the axially fixed derive shaft (15) about said axis (6); and the second flange (20) is fitted in axially sliding, angularly fixed manner to the end portion (15a) of the axially fixed drive shaft (15).

2. A drum as claimed in Claim 1, wherein the second flange (20) is located between the first flange (19) and the drive unit (5).

3. A drum as claimed in Claim 1 or 2, wherein the drive unit (5) comprises an actuating device (24) connected to the second flange (20) to move the second flange (20) axially along the axially fixed drive shaft (15) to and from a closed position substantially contacting the first flange (19).

4. A drum as claimed in Claim 3, wherein the second flange (20) is fitted integrally with a sleeve (21) engaged in axially sliding, angularly fixed manner by the axially fixed drive shaft (15) ; the sleeve (21) expending from the second flange (20) to the drive unit (5), and being connected to the actuating device (24).

5. A drum as claimed in Claim 3 or 4, wherein the actuating device (24) comprises at least one axially fixed, powered screw (30) parallel to said axis (6) ; the powered screw (30) being connected to the second flange (20) by a screw-nut screw coupling.

6. A drum as claimed in Claims 4 and 5, wherein the actuating device (24) comprises an annular plate (25), which is coaxial with said axis (6), is fitted through with the axially fixed drive shaft (15) and the sleeve (21), is connected in rotary and axially fixed manner to the sleeve (21), is fitted through with the powered screw (30), and is connected to the powered screw (30) by the screw-nut screw coupling.

7. A drum as claimed in Claim 5 or 6, wherein the actuating device (24) comprises two axially fixed, powered screws (30) parallel to said axis (6) and located on opposite sides of said axis (6); each powered screw (30) being connected to the second flange (20) by a respective screw-nut screw coupling.

8. A tyre building system comprising at least one drum (1; 1a; 1b) as claimed in one of the foregoing Claims.

9. A system as claimed in Claim 8, and comprising at least one feed unit (35; 35a; 35b; 35c) associated with the drum (1; 1a; 1b) to feed, in use, onto a surface (2) to be rubberized of the carcass (3; 3a; 3b) mounted on the spindle (4 ; 4a; 4b), a strip (39) of elastomeric material, which gradually covers the surface (2) to be rubberized as the spindle (4; 4a; 4b) rotates about said axis (6), and the feed unit (35 ; 35a; 35b; 35c) moves simultaneously along said axis (6).

10. A system as claimed in Claim 9, wherein the feed unit (35; 35a; 35b; 35c) comprises an extruder (36) for producing a rope (37) of elastomeric material; a forming unit (38) for receiving the rope (37), calandering the rope (37) into a contoured strip (39), and applying the contoured strip (39) to the surface (2) to be rubberized; and a telescopic feed unit (40) interposed between the extruder (36) and the forming unit (38) to feed the rope (37) to an inlet of the forming unit (38).

11. A system as claimed in Claim 10, wherein the forming unit (38) is movable, according to a given program depending on the carcass (3; 3a; 3b) mounted on the spindle (4; 4a; 4b), about a vertical axis, in turn movable, according to said program, along a first and second horizontal guide (42, 44) crosswise and parallel to said axis (6) respectively, and comprises an applicator roller (47) positioned tangent to the surface (2) to be rubberized and which sweeps the surface (2) to be rubberized.

12. A system as claimed in one of Claims 9 to 11, and comprising one drum (1a), and two feed units (35a, 35b) located on opposite sides of the spindle (4a) to cover the surface (2) to be rubberized with two layers of different elastomeric materials.

13. A system as claimed in one of Claims 9 to 12, and comprising at least one powered turntable (49) rotating about a vertical axis of rotation (50); and two drums (1a, 1b) mounted substantially opposite each other on the turntable (49).

14. A system as claimed in Claim 13, wherein the two drums (1a, 1b) are mounted on the turntable (49) with their drive units (5) positioned side by side; said vertical axis of rotation (50) extending between the side by side drive units (5).

15. A system as claimed in Claim 14, wherein the turntable (49) rotates in 180° steps about said vertical axis of rotation (50) to stop the spindle (4a; 4b) of each drum (1a; 1b) successively in a loading-unloading position (51) and a work position (52); each spindle (4a; 4b) cooperating with at least one feed unit in the work position (52).

16. A system as claimed in one of Claims 13 to 15, and comprising two said turntables (49a, 49b) located side by side and each supporting a respective pair of said drums (1a, 1b).

17. A system as claimed in Claims 15 and 16, wherein the work positions (52) of the two turntables (49a, 49b) are located facing each other between the two turntables (49a, 49b).

18. A system as claimed in Claim 17, wherein at least one feed unit (35b; 35c), associated with both the turntables (49a, 49b), is located alongside the two work positions (52).

19. A system as claimed in Claim 18, and comprising two feed units (35b, 35c), each associated with both the turntables (49a, 49b); the two feed units (35b, 35c) being positioned facing each other on opposite sides of the two work positions (52).

20. A system as claimed in Claim 18 or 19, and comprising, for each of the two turntables (49a, 49b), a further feed unit (35a) located alongside the relative loading-unloading position (51).

## Patentansprüche

1. Reifenaufbautrommel, die umfasst: eine Spindel (4) mit einer Achse (6) und einem ersten und einem zweiten Flansch (19, 20), die koaxial mit der Achse (6) sind und axial in Bezug auf einander beweglich sind, um einen Reifenunterbau (3) zu halten und zu formen; und eine Antriebseinheit (5) zum Drehen des ersten und zweiten Flansches (19, 20) um die Achse (6) und zum Variieren eines Abstands zwischen dem ersten und zweiten Flansch (19, 20); wobei die Antriebseinheit (5) eine axial fixierte Antriebswelle (15) umfasst, die koaxial mit der Achse (6) ist und eine Ausgangswelle der Antriebseinheit (5) definiert; wobei die axial fixierte Antriebswelle (15) einen Endabschnitt (15a) umfasst, der von der Antriebseinheit (5) auswärts vorsteht; und die Trommel (1) dadurch gekenntzeichnet ist, dass der erste Flansch (19) an dem Endabschnitt (15a) der axial fixierten Welle (15) fixiert ist, um sich mit der axial fixierten Antriebswelle (15) um die Achse (6) zu drehen; und wobei der zweite Flansch (20) in einer axial gleitenden an dem Endabschnitt (15a) der axial fixierten Antriebswelle (15) winkelig fixierten Weise montiert ist.

2. Trommel nach Anspruch 1, wobei der zweite Flansch (20) sich zwischen dem ersten Flansch (19) und der Antriebseinheit (5) befindet.

3. Trommel nach Anspruch 1 oder 2, wobei die Antriebseinheit (5) eine mit dem zweiten Flansch (20) verbundene Betätigungsvorrichtung (24) umfasst, um den zweiten Flansch (20) zu und aus einer geschlossenen Position, die im Wesentlichen den ersten Flansch (19) berührt, axial entlang der axial fixierten Antriebswelle (15) zu bewegen.

4. Trommel nach Anspruch 3, wobei der zweite Flansch (20) integral mit einer Muffe (21) montiert ist, in die von der axial fixierten Antriebswelle (15) in einer axial gleitenden winkelig fixierten Weise eingegriffen wird; wobei die Muffe (21) sich von dem zweiten Flansch (20) zu der Antriebseinheit (5) erstreckt und mit der Betätigungsvorrichtung (24) verbunden ist.

5. Trommel nach Anspruch 3 oder 4, wobei die Betätigungsvorrichtung (24) wenigstens eine axial fixierte angetriebene Schraube (30) umfasst, die durch eine Schrauben-Mutter-Schraubverbindung mit dem zweiten Flansch (20) verbunden ist.

6. Trommel nach Anspruch 4 und 5, wobei die Betätigungsvorrichtung (24) eine ringförmige Platte (25) umfasst, die koaxial mit der Achse (6) ist, durch die die axial fixierte Antriebswelle (15) und die Muffe (21) eingepasst sind, in einer drehbaren und axial fixierten Weise mit der Muffe (21) verbunden ist, durch die die angetriebene Schraube (30) eingepasst ist, und durch die Schrauben-Mutter-Schraubverbindung mit der angetriebene Schraube (30) verbunden ist.

7. Trommel nach Anspruch 5 oder 6, wobei die Betätigungsvorrichtung (24) zwei axial fixierte angetriebene Schrauben (30) parallel zu der Achse (6) umfasst, die sich auf entgegengesetzten Seiten der Achse (6) befinden; wobei jede angetriebene Schraube (30) durch eine jeweilige Schrauben-Mutter-Schraubverbindung mit dem zweiten Flansch (20) verbunden ist.

8. Reifenaufbausystem, das wenigstens eine Trommel (1; 1a; 1b) nach einem der vorhergehenden Ansprüche umfasst.

9. System nach Anspruch 8, das umfasst: wenigstens eine Zuführungseinheit (35; 35a; 35b; 35c), die mit der Trommel (1, 1a; 1b) verbunden ist, um in der Verwendung auf eine Oberfläche (2) des auf der Spindel (4; 4a; 4b) montierten Unterbaus (3; 3a; 3b), die gummiert werden soll, einen Streifen (39) aus elastomerem Material zuzuführen, der die Oberfläche (2), die gummiert werden soll, allmählich bedeckt, während die Spindel (4; 4a; 4b) sich um die Achse (6) dreht und die Zuführungseinheit (35; 35a; 35b; 35c) sich gleichzeitig entlang dieser Achse (6) bewegt.

10. System nach Anspruch 9, wobei die Zuführungseinheit (35; 35a; 35b; 35c) umfasst: eine Extrusionseinrichtung (36) zum Erzeugen eines Seils aus elastomerem Material; eine Ausbildungseinheit (38) zum Aufnehmen des Seils (37), Kalandrieren des Seils (37) zu einem geformten Streifen (39) und Aufbringen des geformten Streifens (39) auf der Oberfläche (2), die gummiert werden soll; und eine ausziehbare Zuführungseinheit (40), die zwischen der Extrusionseinheit (36) und der Ausbildungseinheit (38) eingefügt ist, um das Seil (37) an einen Einlass der Ausbildungseinheit (38) zuzuführen.

11. System nach Anspruch 10, wobei die Ausbildungseinheit (38) gemäß einem vorgegebenden Programm abhängig von dem Unterbau (3; 3a; 3b), der auf der Spindel (4; 4a; 4b) montiert ist, um eine vertikale Achse beweglich ist, die ihrerseits gemäß dem Programm entlang einer ersten und zweiten horizontalen Führung (42, 44) jeweils quer und parallel zu der Achse (6) beweglich ist und eine Aufbringwalze (47) umfasst, die tangential zu der Oberfläche (2), die gummiert werden soll, positioniert ist und die die Oberfläche (2), die gummiert werden soll, streicht.

12. System nach einem der Ansprüche 9 bis 11, das eine Trommel (1a) und zwei Zuführungseinheiten (35a, 35b) umfasst, die sich auf entgegengesetzten Seiten der Spindel (4a) befinden, um die Oberfläche (2), die gummiert werden soll, mit zwei Schichten aus verschiedenen elastomeren Materialien zu überziehen.

13. System nach einem der Ansprüche 9 bis 12, das wenigstens eine angetriebene Drehplatte (49), die sich um eine vertikale Drehachse (50) dreht; und zwei Trommeln (1a, 1b) umfasst, die im Wesentlichen entgegengesetzt zueinander auf der Drehplatte (49) montiert sind.

14. System nach Anspruch 13, wobei die zwei Trommeln (1a, 1b) auf der Drehplatte (49) montiert sind, wobei ihre Antriebseinheiten (5) nebeneinander positioniert sind; wobei die vertikale Drehachse (50) sich zwischen den nebeneinander gelegenen Antriebseinheiten (5) erstreckt.

15. System nach Anspruch 14, wobei die Drehplatte (49) sich in 180°-Schritten um die vertikale Drehachse (50) dreht, um die Spindel (4a; 4b) jeder Trommel (1a; 1b) sukzessive in einer Lade-Entlade-Position (51) und einer Arbeitsposition (52) zu stoppen; wobei jede Spindel (4a; 4b) mit wenigstens einer Zuführungseinheit in der Arbeitsposition (52) zusammenwirkt.

16. System nach einem der Ansprüche 13 bis 15, das zwei Drehplatten (49a, 49b) umfasst, die sich nebeneinander befinden und jede ein jeweiliges Paar der Trommeln (1 a, 1b) hält.

17. System nach Anspruch 15 und 16, wobei die Arbeitspositionen (52) der zwei Drehplatten (49a, 49b) sich einander zugewandt zwischen den zwei Drehplatten (49a, 49b) befinden.

18. System nach Anspruch 17, wobei wenigstens eine Zuführungseinheit (35b; 35c), die mit beiden Drehplatten (49a, 49b) verbunden ist, sich entlang der zwei Arbeitspositionen (52) befindet.

19. System nach Anspruch 18, das zwei Zuführungseinheiten (35b, 35c) umfasst, die jeweils mit beiden Drehplatten (49a, 49b) verbunden sind; wobei die zwei Zuführungseinheiten (35b, 35c) einander zugewandt auf gegenüberliegenden Seiten der zwei Arbeitspositionen (52) positioniert sind.

20. System nach Anspruch 18 oder 19, das für jede der zwei Drehplatten (49a, 49b) eine weitere Zuführungseinheit (35a) umfasst, die sich entlang der relativen Lade-Entladeposition (51) befindet.

## Revendications

1. Tambour de fabrication de pneu comprenant une broche (4) qui présente un axe (6) et des première et seconde brides (19, 20) coaxiales avec ledit axe (6) et mobiles de manière axiale l'une par rapport à l'autre de façon à supporter et à mettre en forme une carcasse de pneu (3) ; et une unité d'entraînement (5) destinée à faire tourner les première et seconde brides (19, 20) autour dudit axe (6), et à faire varier la distance entre les première et seconde brides (19, 20) ; l'unité d'entraînement (5) comprenant un arbre d'entraînement fixe de manière axiale (15) coaxial avec ledit axe (6) et définissant un arbre de sortie de l'unité d'entraînement (5) ; l'arbre d'entraînement fixe de manière axiale (15) comprenant une partie d'extrémité (15a) qui fait saillie vers l'extérieur de l'unité d'entraînement (5) ; et le tambour (1) étant **caractérisé en ce que** la première bride (19) est fixée à la partie d'extrémité (15a) de l'arbre d'entraînement fixe de manière axiale (15) de façon à tourner avec l'arbre d'entraînement fixe de manière axiale (15) autour dudit axe (6) ; et la seconde bride (20) est installée d'une façon fixe de manière angulaire et coulissante de manière axiale, sur la partie d'extrémité (15a) de l'arbre d'entraînement fixe de manière axiale (15).

2. Tambour selon la revendication 1, dans lequel la seconde bride (20) se situe entre la première bride (19) et l'unité d'entraînement (5).

3. Tambour selon la revendication 1 ou la revendication 2, dans lequel l'unité d'entraînement (5) comprend un dispositif d'actionnement (24) connecté à la seconde bride (20) et destiné à déplacer la seconde bride (20) de manière axiale le long de l'arbre d'entraînement (15) vers une, et en s'éloignant d'une, position fermée en venant sensiblement en contact avec la première bride (19).

4. Tambour selon la revendication 3, dans lequel la seconde bride (20) est installée d'une pièce avec un manchon (21) mis en prise d'une façon fixe de manière angulaire et coulissante de manière axiale par l'arbre d'entraînement fixe de manière axiale (15) ; le manchon (21) s'étendant à partir de la seconde bride (20) vers l'unité d'entraînement (5), et étant connecté au dispositif d'actionnement (24).

5. Tambour selon la revendication 3 ou la revendication 4, dans lequel le dispositif d'actionnement (24) comprend au moins une vis motorisée fixe de manière axiale (30), parallèle audit axe (6) ; la vis motorisée (30) étant connectée à la seconde bride (20) par un accouplement à vis par vis - écrou.

6. Tambour selon les revendications 4 et 5, dans lequel le dispositif d'actionnement (24) comprend une plaque annulaire (25), qui est coaxiale avec ledit axe (6), est installée à travers avec l'arbre d'entraînement fixe de manière axiale (15) et le manchon (21), est connectée d'une façon rotative et fixe de manière axiale au manchon (21), est installée à travers avec la vis motorisée (30), et est connectée à la vis actionnée (30) par l'accouplement à vis par vis - écrou.

7. Tambour selon la revendication 5 ou la revendication 6, dans lequel le dispositif d'actionnement (24) comprend deux vis motorisées fixes de manière axiale (30), parallèles audit axe (6) et situées sur des côté opposé dudit axe (6) ; chaque vis motorisée (30) étant connectée à la seconde bride (20) par un accouplement à vis par vis - écrou respectif.

8. Système de fabrication de pneu comprenant au moins un tambour (1 ; 1a ; 1b) selon l'une quelconque des revendications précédentes.

9. Système selon la revendication 8, et comprenant au moins une unité d'approvisionnement (35 ; 35a ; 35b ; 35c) associée au tambour (1 ; 1a ; 1b) et destinée à approvisionner, en service, sur une surface (2) à caoutchouter de la carcasse (3 ; 3a ; 3b) montée sur la broche (4 ; 4a ; 4b), une bande (39) de matériau élastomère, qui couvre de manière progressive la surface (2) à caoutchouter lorsque la broche (4 ; 4a ; 4b) tourne autour dudit axe (6), et lorsque l'unité d'approvisionnement (35 ; 35a ; 35b ; 35c) se déplace de manière simultanée le long dudit axe (6).

10. Système selon la revendication 9, dans lequel l'unité d'approvisionnement (35 ; 35a ; 35b ; 35c) comprend une extrudeuse (36) destinée à produire un fil (37) de matériau élastomère ; une unité de formage (38) destinée à recevoir le fil (37), à calandrer le fil (37) en une bande façonnée (39), et à appliquer la bande façonnée (39) sur la surface (2) à caoutchouter ; et une unité d'approvisionnement télescopique (40) interposée entre l'extrudeuse (36) et l'unité de formage (38) destiné à approvisionner le fil (37) vers une entrée de l'unité de formage (38).

11. Système selon la revendication 10, dans lequel l'unité de formage (38) est mobile, selon un programme donné qui dépend de la carcasse (3 ; 3a ; 3b) montée sur la broche (4 ; 4a ; 4b), autour d'un axe vertical, mobile à son tour, selon ledit programme, le long d'un premier et d'un second guides horizontaux (42, 44) en travers et parallèle par rapport audit axe (6) respectivement, et comprend un rouleau applicateur (47) positionné tangent à la surface (2) à caoutchouter et qui balaie la surface (2) à caoutchouter.

12. Système selon l'une quelconque des revendications 9 à 11, et comprenant un tambour (1a), et deux unités d'approvisionnement (35a, 35b) situées sur des côtés opposés de la broche (4a) de façon à couvrir la surface (2) à caoutchouter avec deux couches de matériaux élastomères différents.

13. Système selon l'une quelconque des revendications 9 à 12, et comprenant au moins une plaque tournante motorisée (49) qui tourne autour d'un axe de rotation vertical (50) ; et deux tambours (1a, 1b) sont montés sensiblement opposés l'un à l'autre sur la plaque tournante (49).

14. Système selon la revendication 13, dans lequel les deux tambours (1a, 1b) sont montés sur la plaque tournante (49), leurs unités d'entraînement (5) étant positionnées côte à côte ; ledit axe de rotation vertical (50) s'étendant entre les unités d'entraînement (5) positionnées côte à côte.

15. Système selon la revendication 14, dans lequel la plaque tournante (49) tourne par pas de 180° autour dudit axe de rotation vertical (50) de façon à arrêter la broche (4a ; 4b) de chaque tambour (1a ; 1b) successivement dans une position de chargement - déchargement (51) et dans une position de travail (52) ; chaque broche (4a ; 4b) coopérant avec une unité d'approvisionnement au moins dans la position de travail (52).

16. Système selon l'une quelconque des revendications 13 à 15, et comprenant deux dites plaques tournantes (49a, 49b) situées côte à côte et chacune supportant une paire respective desdits tambours (1a, 1b).

17. Système selon les revendications 15 et 16, dans lequel les positions de travail (52) des deux plaques tournantes (49a, 49b) se situent en face l'une de l'autre entre les deux plaques tournantes (49a, 49b).

18. Système selon la revendication 17, dans lequel une unité d'approvisionnement (35b ; 35c) au moins, associée aux deux plaques tournantes (49a, 49b), se situe à côté des deux positions de travail (52).

19. Système selon la revendication 18, et comprenant deux unités d'approvisionnement (35b, 35c), chacune d'elle étant associée aux deux plaques tournantes (49a, 49b) ; les deux unités d'approvisionnement (35b, 35c) étant positionnées en face l'une de l'autre sur des côtés opposés des deux positions de travail (52).

20. Système selon la revendication 18 ou la revendication 19, et comprenant, pour chacune des deux plaques tournantes (49a, 49b), une autre unité d'approvisionnement (35a) située à côté de la position de chargement - déchargement relative (51).
